# EUROPEAN PATENT APPLICATION

(11) **EP 4 131 793 A1**
(43) Date of publication of application: **08.02.2023**
(21) Application number: 21785311.8
(22) Date of filing: 09.04.2021
(51) Int. Cl.: H04B 7/0413

(54) **DATA TRANSMISSION METHOD AND APPARATUS**

(30) Priority: 09.04.2020 CN 202010275402
(71) Applicant: Huawei Technologies Co., Ltd., Longgang District Shenzhen, Guangdong 518129 (CN)
(72) Inventor: YANG, Mao, Xi'an, Shaanxi 710072 (CN); YAN, Zhongjiang, Xi'an, Shaanxi 710072 (CN); YU, Jian, Shenzhen, Guangdong 518129 (CN)
(74) Representative: Maiwald GmbH
(86) International application number: PCT/CN2021/086131
(87) International publication number: WO 2021/204237

(57) **Abstract**

This application provides a data transmission method and an apparatus, to improve data transmission reliability. The method includes: A second device receives first information from a first device, where the first information indicates an available antenna panel of the first device. The second device performs data transmission with the first device based on the first information.

## Description

This application claims priority to Chinese Patent Application No. 202010275402.8, filed with the China National Intellectual Property Administration on April 9, 2020 and entitled "DATA TRANSMISSION METHOD AND APPARATUS", which is incorporated herein by reference in its entirety.

### TECHNICAL FIELD

This application relates to the communication field, and more specifically, to a data transmission method and an apparatus.

### BACKGROUND

A multi-panel MIMO (Multi-Panel MIMO, MP MIMO) technology is currently applied to add more spatial streams to improve a throughput in a next-generation wireless local area network (Wireless Local Area Network, WLAN).

The MP MIMO technology means that one wireless device includes a plurality of interconnected panels, where each panel is equipped with a series of receive and transmit antennas, that is, antenna resources of one wireless device are distributed to a plurality of panels that are close to or far away from each other. The MP MIMO technology reduces deployment costs and complexity of numerous antennas, and improves scalability, a network coverage capability, and a MIMO channel gain. It can be learned that the MP MIMO technology provides a feasible solution idea for the next-generation WLAN to use more spatial streams or more antenna resources.

To improve a coverage capability and a space diversity gain, a plurality of panels are usually located at different geographical locations. As a result, each panel has a different status at a specific moment. For example, on one specific 20 MHz channel, some panels are serving a station (Station, STA), and some panels are not serving a STA. On a specific 20 MHz channel, channels of different panels have different busy/idle statuses. Different panels may also have different busy/idle statuses on different channels. Therefore, it is necessary to obtain capability information of different panels of the wireless device during data transmission.

### SUMMARY

This application provides a data transmission method and an apparatus, to improve data transmission performance.

According to a first aspect, a data transmission method is provided. A second device receives first information from a first device, where the first information indicates an available antenna panel of the first device; the second device performs data transmission with the first device based on the first information.

Based on the foregoing technical solutions, a transmit end can learn of whether different panels of a peer device are idle, and select an appropriate MIMO mode to perform data transmission with the peer device. In this way, a MIMO mode that does not match a panel capability of the peer device is not selected for data transmission, so that data transmission reliability is improved.

In a possible implementation, the first information further indicates an available subchannel of the available antenna panel.

In a possible implementation, before the second device receives the first information from the first device, the method further includes: The second device sends second information to the first device, where the second information requests the first device to send the first information.

In a possible implementation, the second information further includes an identifier of at least one target antenna panel. The target antenna panel is an antenna panel that the second device requests the first device to use.

In a possible implementation, before the second device receives the first information from the first device, the method further includes: The second device receives a clear to send CTS frame sent by the first device.

In a possible implementation, that the second device performs data transmission with the first device based on the first information includes: The second device determines a multiple input multiple output MIMO mode based on the first information. The second device performs data transmission with the first device in MIMO mode.

In a possible implementation, that the second device performs data transmission with the first device in MIMO mode includes: The second device sends third information to the first device. The third information indicates a resource unit RU into which the available subchannel is divided and a MIMO mode on the RU.

According to a second aspect, a communication apparatus is provided. The communication apparatus includes: a transceiver unit, configured to receive first information from a first device, where the first information indicates an available antenna panel of the first device; and a processing unit, configured to perform data transmission with the first device based on the first information.

In a possible implementation, the first information further indicates an available subchannel of the available antenna panel.

In a possible implementation, the transceiver unit is further configured to send second information to the first device, where the second information requests the first device to send the first information.

In a possible implementation, the second information further includes an identifier of at least one target antenna panel. The target antenna panel is an antenna panel that the second device requests the first device to use.

In a possible implementation, the transceiver unit is further configured to receive a clear to send CTS frame from the first device.

In a possible implementation, the processing unit is specifically configured to determine a multiple input multiple output MIMO mode based on the first information. The transceiver unit is specifically configured to perform data transmission with the first device in MIMO mode.

In a possible implementation, the transceiver unit is further configured to send third information to the first device, where the third information indicates a resource unit RU into which the available subchannel is divided and a MIMO mode on the RU.

According to a third aspect, a network device is provided. The network device includes: a memory, configured to store executable instructions; and a processor, configured to invoke and run the executable instructions in the memory, to perform the method in the first aspect or any one of the possible implementations of the first aspect.

According to a fourth aspect, this application provides a computer-readable storage medium. The computer-readable storage medium stores a computer program. When the computer program is run on a computer, the computer is enabled to perform the method according to the first aspect or any possible implementation of the first aspect.

### BRIEF DESCRIPTION OF DRAWINGS

FIG. 1 is a schematic diagram of a bandwidth negotiation process in 802.11ax;
FIG. 2 is a schematic diagram of a structure of a BQRP frame;
FIG. 3 is a schematic diagram of a structure of a BQR control subfield;
FIG. 4 is a schematic diagram of another bandwidth negotiation process in 802.11ax;
FIG. 5 is an example of necessity of obtaining panel capability information;
FIG. 6 is a schematic diagram of an application system architecture according to an embodiment of this application;
FIG. 7 is a schematic flowchart of a data transmission method according to an embodiment of this application;
FIG. 8 is a schematic diagram of a PNRP frame design according to an embodiment of this application;
FIG. 9 is a schematic diagram of another PNRP frame design according to an embodiment of this application;
FIG. 10 is a schematic diagram of a PNR frame design according to an embodiment of this application;
FIG. 11 is a schematic diagram of another PNR frame design according to an embodiment of this application;
FIG. 12 is a schematic diagram of another PNR frame design according to an embodiment of this application;
FIG. 13 is a schematic diagram of another PNR frame design according to an embodiment of this application;
FIG. 14 is a schematic diagram of another PNR frame design according to an embodiment of this application;
FIG. 15 is a schematic diagram of TF-PN design according to an embodiment of this application;
FIG. 16 is a schematic diagram of another TF-PN design according to an embodiment of this application;
FIG. 17 is a schematic diagram of another TF-PN design according to an embodiment of this application;
FIG. 18 is a schematic diagram of an EHT-SU-H PPDU design according to an embodiment of this application;
FIG. 19 is a schematic diagram of another EHT-SU-H PPDU design according to an embodiment of this application;
FIG. 20 is a schematic block diagram of a communication apparatus according to an embodiment of this application; and
FIG. 21 is a schematic block diagram of a network device according to an embodiment of this application.

### DESCRIPTION OF EMBODIMENTS

The following describes technical solutions of this application with reference to accompanying drawings.

Embodiments of this application may be applied to various communication systems, for example, a wireless local area network (wireless local area network, WLAN), a narrowband internet of things (Narrowband Internet of Things, NB-IoT) system, a global system for mobile communication (Global System for Mobile Communications, GSM), an enhanced data rate for GSM evolution (Enhanced Data Rate for GSM Evolution, EDGE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a long term evolution (Long Term Evolution, LTE) system, a satellite communication system, a 5th generation (5th generation, 5G) system, and a new communication system emerging in the future.

The terminal device in embodiments of this application may include various handheld devices, vehicle-mounted devices, wearable devices, or computing devices that have a wireless communication function, or other processing devices connected to a wireless modem. A terminal may be a mobile station (Mobile Station, MS), a subscriber unit (subscriber unit), user equipment (user equipment, UE), a cellular phone (cellular phone), a smartphone (smartphone), a wireless data card, a personal digital assistant (Personal Digital Assistant, PDA) computer, a tablet computer, a wireless modem (modem), a handheld (handset) device, a laptop computer (laptop computer), a machine type communication (Machine Type Communication, MTC) terminal, or the like.

In existing IEEE 802.11ax, an access point (Access Point, AP) and a station (Station, STA) learn of busy/idle statuses of different channels of a peer device through channel negotiation, and perform data transmission based on learned channel information.

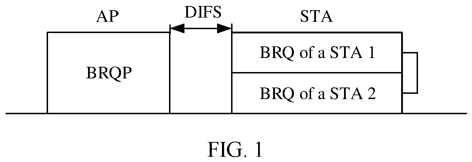

In an implementation, a bandwidth negotiation process is based on a bandwidth query report poll (Bandwidth Query Report Poll, BQRP) frame and a bandwidth query report (Bandwidth Query Report, BQR) frame. As shown in FIG. 1, the process is described as follows.

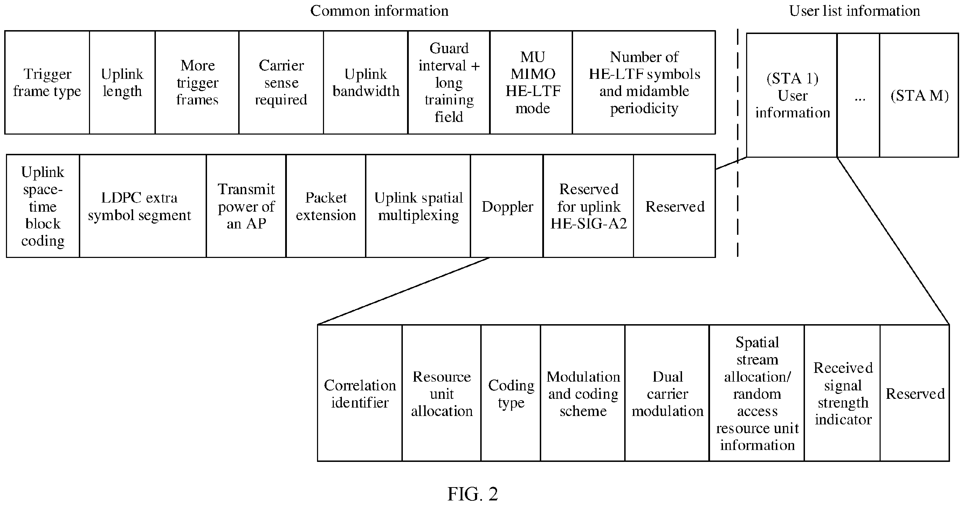

Step 1: An AP sends one BQRP frame. The frame is a type of trigger frame (Trigger Frame, TF) in 802.11ax. A trigger type (Trigger Type) field in the TF is configured to be 6 to indicate a BRQP frame. A structure of the BRQP frame is shown in FIG. 2.

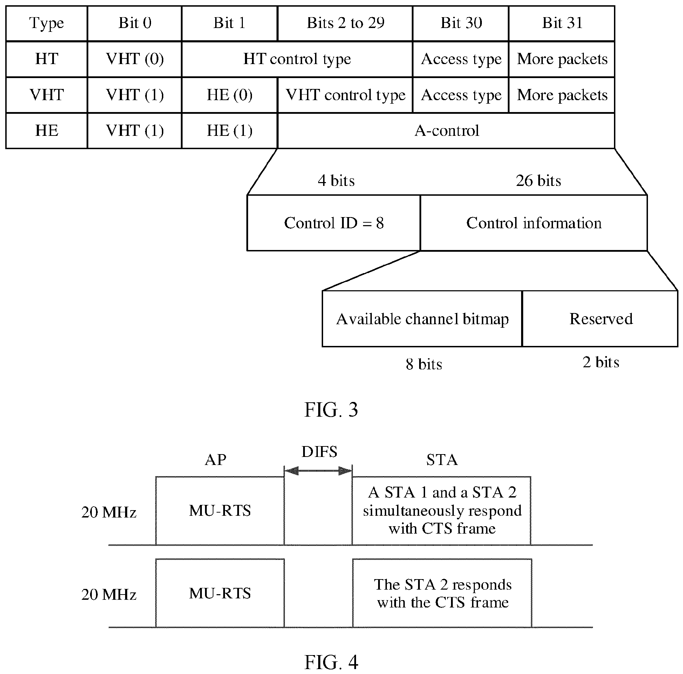

Step 2: After a STA receives the BQRP frame, if the STA determines that the BQRP frame is sent by an associated AP, and the frame requires the STA to feed back bandwidth information, the STA responds with a bandwidth query report (Bandwidth Query Report, BQR) on a corresponding resource unit (Resource Unit, RU) in trigger-based physical layer protocol data unit (Trigger-based PHY Protocol Data Unit, TB PPDU) format after a short interframe space (Short Interframe Space, SIFS). A structure of a BQR control subfield is shown in FIG. 3. The control subfield is a type ofn A-control (A-Control) subfield in IEEE 802.11ax. A value of 8 of a control identifier field indicates a BQR. An available channel bitmap (Available Channel Bitmap) field in a control information field includes 8 bits. Each bit indicates a busy/idle status of one 20 MHz channel. A value of 1 indicates that the 20 MHz channel is idle, and a value of 0 indicates that the 20 MHz channel is busy.

In another implementation, a channel protection process is based on a multi-user request to send (Multi-user Request To Send, MU-RTS) frame and a clear to send (Clear to Send, CTS) frame. As shown in FIG. 4, the process is described as follows.

Step 1: An AP sends one MU-RTS frame. The frame is a type of TF in 802.11ax. A trigger type field in the TF is configured to be 3 to indicate an MU-RTS frame.

Step 2: After a STA receives the MU-RTS frame, if the STA determines that the MU-RTS frame is sent by an associated AP, and the frame requires the STA to feed back a CTS frame, the STA responds with the CTS frame on a corresponding 20 MHz RU in TB PPDU format after an SIFS.

Currently, a throughput is expected to be improved by adding a spatial stream. However, due to a limit of a device capability, it is usually difficult to provide a large number of spatial streams (for example, 16 spatial streams).

Therefore, a multi-panel MIMO (Multi-Panel MIMO, MP MIMO) technology is applied in a next-generation wireless local area network (Wireless Local Area Network, WLAN) to add more spatial streams, to improve a throughput.

The MP MIMO technology means that one wireless device includes a plurality of interconnected panels, where each panel is equipped with a series of receive and transmit antennas. In other words, antenna resources of one wireless device are distributed to a plurality of panels that are close to or far away from each other. The MP MIMO technology reduces deployment costs and complexity of numerous antennas, and improves scalability, a network coverage capability, and a MIMO channel gain. It can be learned that the MP MIMO technology provides a feasible solution idea for the next-generation WLAN to use more spatial streams or more antenna resources.

To improve a coverage capability and a space diversity gain, a plurality of panels are usually located at different geographical locations. As a result, each panel has a different status at a specific moment. For example, on one specific 20 MHz channel, some panels are serving a station (Station, STA), and some panels are not serving a STA. In other words, on one specific 20 MHz channel, channels of different panels have different busy/idle statuses. Different panels may also have different busy/idle statuses on different channels. Therefore, it is necessary to obtain capability information of different panels of the wireless device during data transmission.

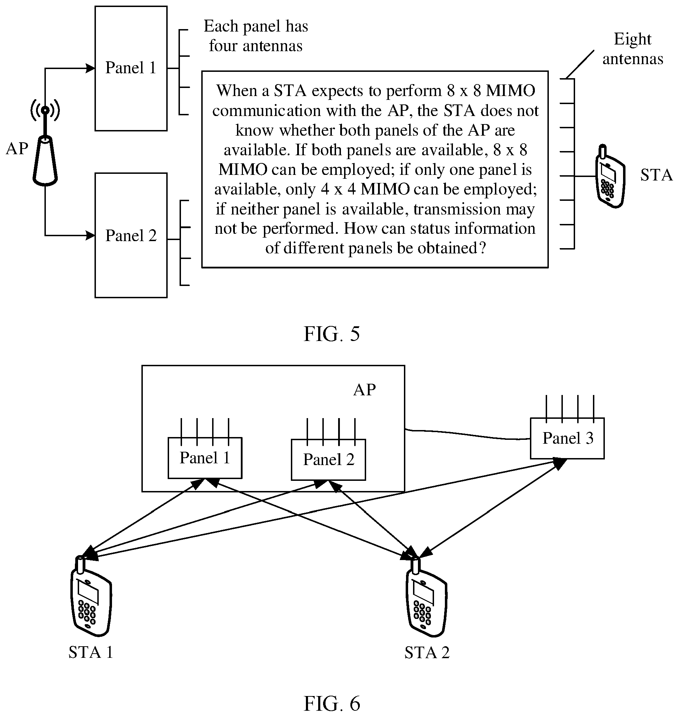

As shown in FIG. 5, for example, an AP includes two panels: a panel 1 and a panel 2, and each panel has four antennas. When one STA with eight antennas expects to perform 8 x 8 MIMO data transmission with the AP, the STA does not know whether both panels of the AP are available (in other words, whether channels are idle). If both the panels are available, a maximum of 8 x 8 MIMO can be employed in data transmission. If only one panel is available, only 4 x 4 MIMO can be employed in data transmission. If neither panel is available, data transmission cannot be performed. FIG. 5 is merely used as an example for transmission with a 20 MHz bandwidth. When a bandwidth is larger (for example, 40/80/160/320 MHz), difference between statuses of different panels on different 20 MHz channels is more distinct. It can be seen that capability information of different panels is critical, but how this information is learned needs to be specially designed.

The technical solution provided in this application is applicable to application scenarios in which data transmission is performed between one AP and one or more non-AP stations (non-Access Point Station, non-AP STA), between one AP and one or more APs, and between one non-AP STA and one or more non-AP STAs. For example, as shown in FIG. 6, antennas of the AP are mounted on a plurality of panels, and each panel includes some antennas. The plurality of panels may be connected in a wired manner, or perform data transmission in a wireless manner. There may be one non-AP STA, or there may be a plurality of non-AP STAs. Each STA may be served by only one panel and an antenna resource of the panel, or may be served by a plurality of panels and antenna resources of the panels together. For example, one AP includes three panels: a panel 1, a panel 2, and a panel 3. When the AP performs data transmission with a STA 1 and a STA 2, each STA may receive services of only one panel and an antenna resource thereof, or may receive services of two panels and antenna resources thereof, or may receive services of three panels and antenna resources thereof.

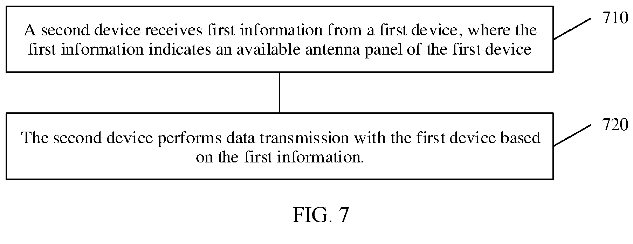

FIG. 7 is a schematic diagram of a data transmission method according to an embodiment of this application. The data transmission method 700 includes the following steps.

710: A second device receives first information from a first device, where the first information indicates an available antenna panel of the first device.

It should be understood that the first information may indicate only a specific available antenna panel, in other words, may include only information about an available antenna panel. The first information may alternatively indicate whether an antenna panel of the first device is available, in other words, may include information about an available antenna panel and an unavailable antenna panel. For example, the first device includes four antenna panels, only an antenna panel 1 and an antenna panel 3 are available, and an antenna panel 2 and an antenna panel 4 are unavailable. In this case, the first information may include only information about the available antenna panel 1 and the available antenna panel 3, and may indicate that the antenna panel 1 and the antenna panel 3 are available. Alternatively, the first information may include information about the antenna panel 1, the antenna panel 2, the antenna panel 3, and the antenna panel 4, and may indicate that the antenna panel 1 and the antenna panel 3 are available, and the antenna panel 2 and the antenna panel 4 are unavailable.

Optionally, the first information may indicate whether all antenna panels of the first device are available, or may indicate whether some antenna panels of the first device are available. For example, the first device includes four antenna panels, and the first information may indicate whether two of the antenna panels are available, or may indicate whether the four antenna panels are available.

Specifically, optionally, the first information may further indicate an available subchannel of the available antenna panel. If available subchannels of available antenna panels are the same, the second device may determine a MIMO mode to perform data transmission with the first device. If available subchannels of available antenna panels are different, the second device may determine at least one MIMO mode to perform data transmission with the first device.

Optionally, before receiving the first information from the first device, the second device may send second information to the first device. The second information requests the first device to send the first information. It can be learned that the first information may be actively sent by the first device, or may be sent based on a request of the second device.

Optionally, the second information may include an identifier of at least one target antenna panel. The target antenna panel is an antenna panel that the second device requests the first device to use. The target antenna panel may be at least one antenna panel that is close to the second device, or may be at least one antenna panel that the second device expects the first device to use. When the second information includes the identifier of the at least one target antenna panel, the first information may indicate an available antenna panel that the second device requests the first device to use, or may indicate an available antenna panel among all antenna panels of the first device, or may indicate an available antenna panel that the first device allows the second device to use.

Optionally, the second information may include no identifier of the at least one target antenna panel. In this case, the first information may indicate an available antenna panel among all antenna panels of the first device, or may indicate an available antenna panel that the first device allows the second device to use.

Optionally, the first information may be carried in a panel negotiation report (Panel Negotiation Report, PNR) frame.

Optionally, the second information may be carried in a panel negotiation report poll (Panel Negotiation Report Poll, PNRP) frame, or may be carried in a trigger frame for panel negotiation (Trigger Frame for Panel Negotiation, TF-PN). Before receiving the first information from the first device, the second device may further receive a clear to send (Clear to Send, CTS) frame sent by the first device.

720: The second device performs data transmission with the first device based on the first information.

Specifically, optionally, the second device determines the MIMO mode based on the first information; the second device performs data transmission with the first device in MIMO mode.

There may be one or more MIMO modes. If the first information indicates only the available antenna panel of the first device, or indicates that available subchannels of available antenna panels of the first device are the same, the second device may perform data transmission with the first device in one MIMO mode. If the first information indicates that available subchannels of available antenna panels of the first device are different, the second device may perform data transmission with the first device in at least one MIMO mode.

In a process in which the second device performs data transmission with the first device in MIMO mode, the second device may further send third information to the first device. The third information indicates a resource unit RU into which the available subchannel is divided and a MIMO mode on the RU. It should be understood that there may be one or more RUs. When available subchannels of available antenna panels are different, the available subchannels may be divided into at least two RUs. The at least two RUs include a first RU and a second RU. Data transmission is performed on the first RU in a first MIMO mode, and is performed on the second RU in a second MIMO mode. A subchannel included in the first RU is different from a subchannel included in the second RU.

Optionally, the first device may be an AP or a STA, and the second device may also be an AP or a STA. This is not limited in embodiments of this application.

In the technical solution provided in embodiments of this application, a transmit end can learn of whether different panels of a peer device are idle, and select an appropriate MIMO mode to perform data transmission with the peer device. In this way, a MIMO mode that does not match a panel capability of the peer device is not selected for data transmission, so that data transmission reliability is improved.

To more specifically describe the data transmission method provided in embodiments of this application, specific implementations are used for detailed description. For example, the first device is an AP, and the second device is a STA. The AP includes at least one antenna panel.

### Implementation 1:

An overall process is as follows.
Step 1: The STA sends second information to the AP, where the second information is carried in a panel negotiation report poll (Panel Negotiation Report Poll, PNRP) frame, and the PNRP frame is intended for requesting the AP to send information about a currently available panel of the AP or information about available subchannels of different panels of the AP.
Step 2: The AP receives the PNRP frame, and if a destination address of the PNRP frame is not the AP, the AP discards the PNRP frame; or if a destination address of the PNRP frame is the AP, the AP needs to send first information to the STA after an inter frame space (Inter Frame Space, IFS). The first information is carried in a panel negotiation report (Panel Negotiation Report, PNR) frame, and the PNR frame includes the information about the currently available panel of the AP or the information about the available subchannels of different panels of the AP. It should be understood that before responding to the STA with the PNR frame, the AP may further respond to the STA with a CTS frame. This is not limited in embodiments of this application.
Step 3: After receiving the PNR frame with which the AP responds, the STA extracts the information about the currently available panel of the AP or the information about the available subchannels of different panels of the AP, and further determines, based on the information, at least one MIMO mode for data transmission.

A method for designing the PNRP frame and the PNR frame is further described.

### PNRP frame design method 1:

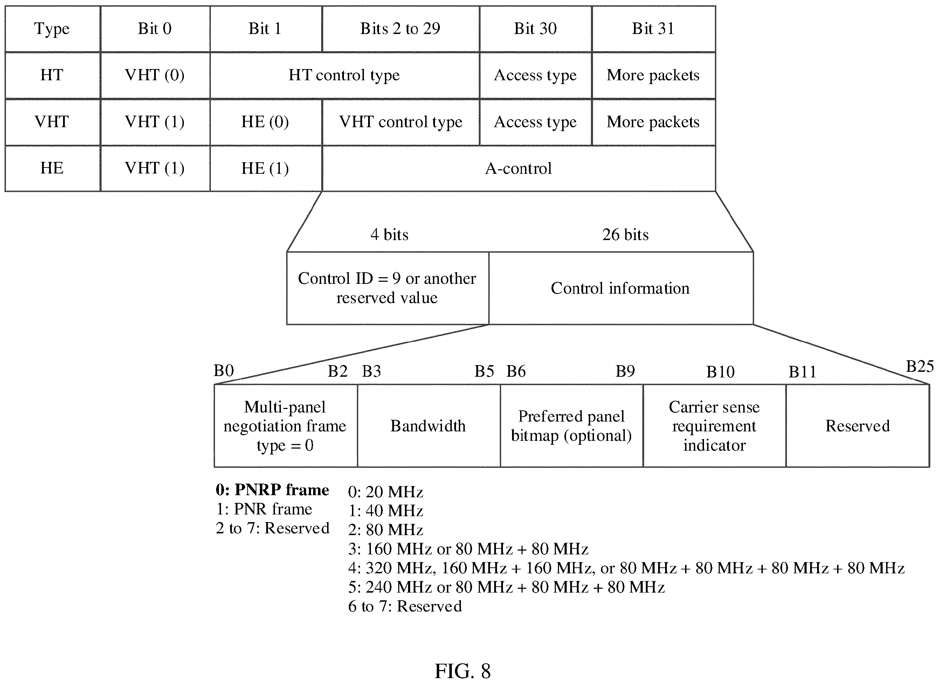

As shown in FIG. 8, multi-panel negotiation frames (including PNRP frames and PNR frames) use an A-control field in IEEE 802.11ax. It should be understood that frames including multi-panel negotiation control fields are collectively referred to as multi-panel negotiation frames. A control identifier field in the A-control field uses an existing reserved value (for example, 9) to indicate a multi-panel negotiation frame. A control information field includes a plurality of subfields. The multi-panel negotiation frame type field indicates a type of multi-panel negotiation frame. For example, a value of 0 indicates a PNRP frame, and a value of 1 indicates a PNR frame. When a value is 0, allocation of a subsequent structure includes at least one of the following fields: a bandwidth field that indicates a bandwidth of current transmission; a preferred panel bitmap field that indicates a panel that the STA prefers the AP to use, where each bit indicates one panel, a value of 1 indicates being preferred for use, and a value of value 0 indicates being not preferred for use; a carrier sense requirement indicator field that indicates whether each panel of a receiver needs carrier sense to determine panel availability information or information about an available bandwidth for a panel. It should be noted that the number of bits of the foregoing subfields in the control information field in the figure is merely an example, and the number of bits of each subfield may be increased or decreased as required, provided that a total length of all subfields does not exceed 26 bits.

### PNRP frame design method 2:

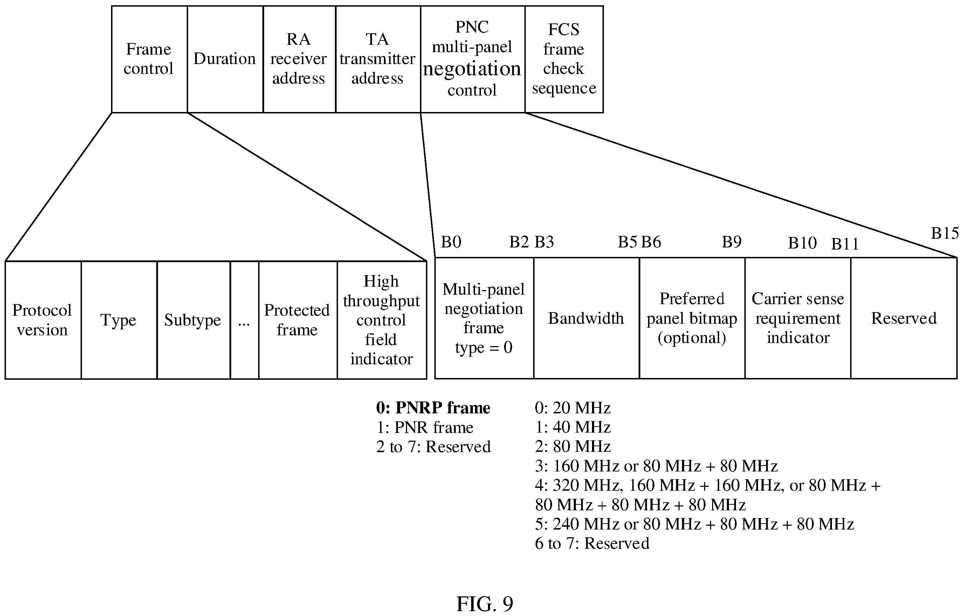

As shown in FIG. 9, a difference from the design method 1 lies in that in the design method 1, an A-control field in IEEE 802.11ax carries a PNRP frame, while in the design method 2, a new media access control (Media Access Control, MAC) frame type is specially designed for a multi-panel negotiation frame in IEEE 802.11. A value of a type (Type) field in a frame control (Frame Control) field in an MAC frame in IEEE 802.11 is 01, and a value of a subtype (SubType) field is 0010 or another reserved value. A structure of a multi-panel negotiation control (Panel Negotiation Control, PNC) field is basically the same as a structure of the control information field in the design method 1, and a total length of the PNC field may be 16 bits.

### PNRP frame design method 3:

A difference from the design method 1 lies in that in the design method 1, an A-control field of IEEE 802. 11ax carries a PNRP frame, while in the design method 3, a BQRP frame (as shown in FIG. 2) in IEEE 802. 11ax is directly reused without any change.

### PNR frame design method 1:

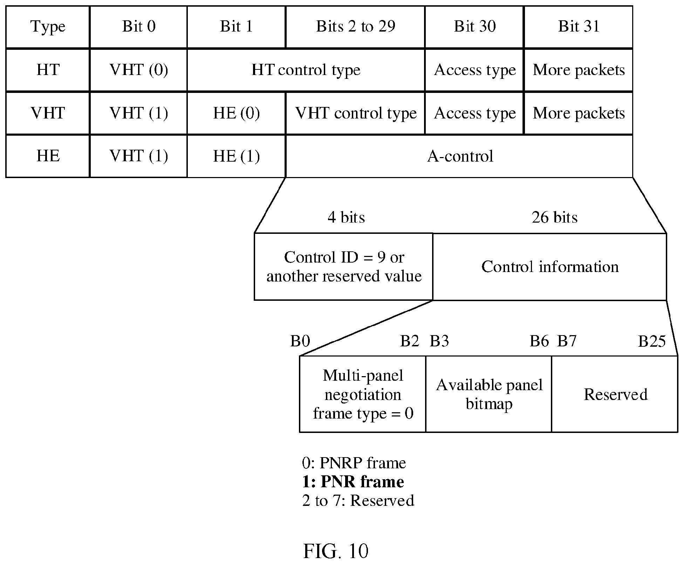

As shown in FIG. 10, multi-panel negotiation frames (including PNRP frames and PNR frames) use an A-control field in IEEE 802.11ax. A control identifier field in the A-control field uses an existing reserved value (for example, 9) to indicate a multi-panel negotiation frame. A control information field includes a plurality of subfields. The multi-panel negotiation frame type field indicates a type of multi-panel negotiation frame. For example, a value of 0 indicates a PNRP frame, and a value of 1 indicates a PNR frame. When a value is 1, allocation of a subsequent structure is as follows: An available panel bitmap field indicates an available panel of the AP. Each bit indicates one panel. A value of 1 indicates that the panel is available, and a value of 0 indicates that the panel is unavailable. It should be noted that the number of bits of the foregoing subfields in the control information field in the figure is merely an example, and the number of bits of each subfield may be increased or decreased as required, provided that a total length of all subfields does not exceed 26 bits.

### PNR frame design method 2:

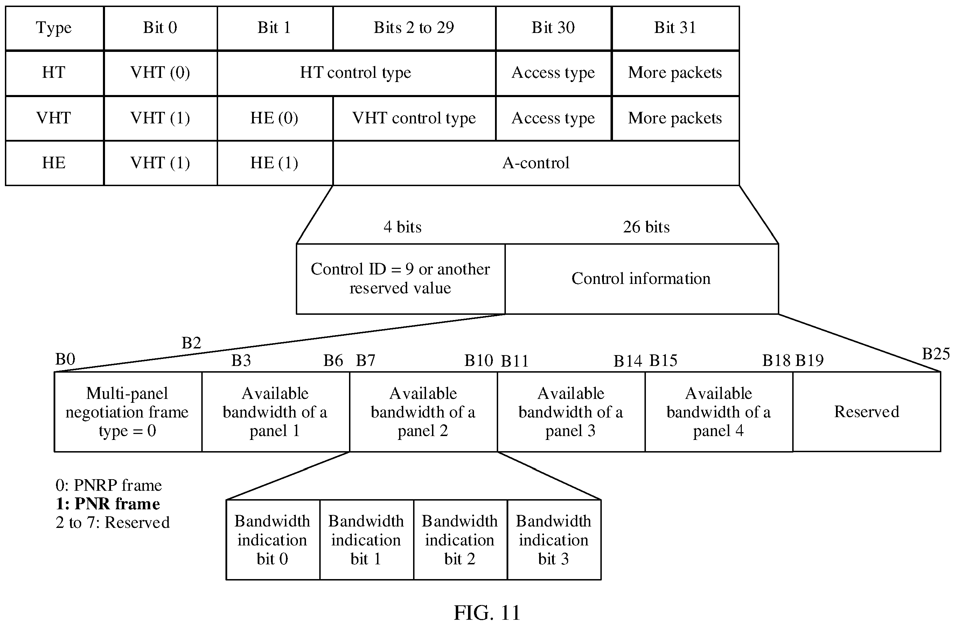

As shown in FIG. 11, similar to the design method 1, a difference lies in composition of a control information field of an A-control field. A multi-panel negotiation frame type field is the same as that in the design method 1. When a value of the field is 1, the field is followed by available bandwidth fields for four panels. An available bandwidth field for each panel includes 4 bits. The meanings of the 4 bits are shown in Table 1. For each bandwidth indication bit in Table 1, a value of 1 indicates available, and a value of 0 indicates unavailable.

**Table 1 Meaning of an available bandwidth field for a panel**

| Bandwidth | Bandwidth indication bit 0 | Bandwidth indication bit 1 | Bandwidth indication bit 2 | Bandwidth indication bit 3 |
|---|---|---|---|---|
| 20 MHz | Indicates whether a first 20 MHz bandwidth is available | None | None | None |
| 40 MHz | Indicates whether a first 20 MHz bandwidth is available | Indicates whether a second 20 MHz bandwidth is available | None | None |
| 80 MHz | Indicates whether a first 20 MHz bandwidth is available | Indicates whether a second 20 MHz bandwidth is available | Indicates whether a third 20 MHz bandwidth is available | Indicates whether a fourth 20 MHz bandwidth is available |
| 160 MHz | Indicates whether a first 40 MHz bandwidth is available | Indicates whether a second 40 MHz bandwidth is available | Indicates whether a third 40 MHz bandwidth is available | Indicates whether a fourth 40 MHz bandwidth is available |
| 320 MHz | Indicates whether a first 80 MHz bandwidth is available | Indicates whether a second 80 MHz bandwidth is available | Indicates whether a third 80 MHz bandwidth is available | Indicates whether a fourth 80 MHz bandwidth is available |
| 240 MHz | Indicates whether a first 80 MHz bandwidth is available | Indicates whether a second 80 MHz bandwidth is available | Indicates whether a third 80 MHz bandwidth is available | - |

### PNR frame design method 3:

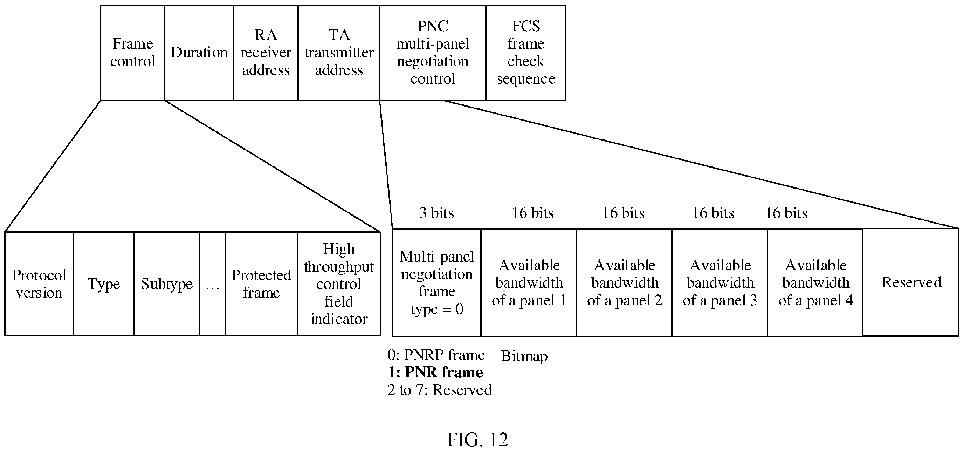

As shown in FIG. 12, a difference from the design method 1 lies in that this design method uses a new MAC frame. A value of a type field in a frame control field is 01, and a value of a subtype field is another reserved value. A structure of the PNC field is basically the same as the structure of the control information field in the design method 2. A difference lies in that an available bandwidth field for each panel is 16 bits, so that each bit may indicate an availability status of one 20 MHz channel, and can represent availability status information of a 320 MHz channel.

### PNR frame design method 4:

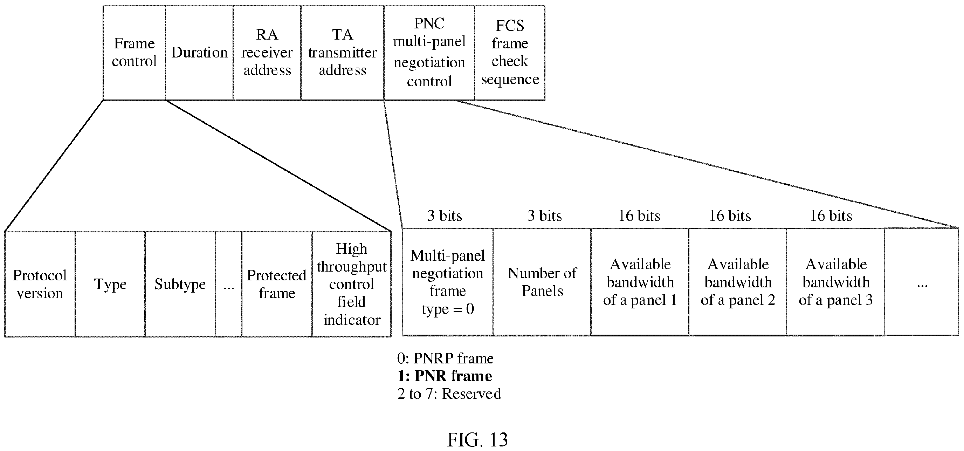

As shown in FIG. 13, this design method is similar to the design method 3. A difference lies in that a PNC field in this design method is variable in length, and the length of the PNC field is determined by a panel number (Panel Num) field.

### PNR frame design method 5:

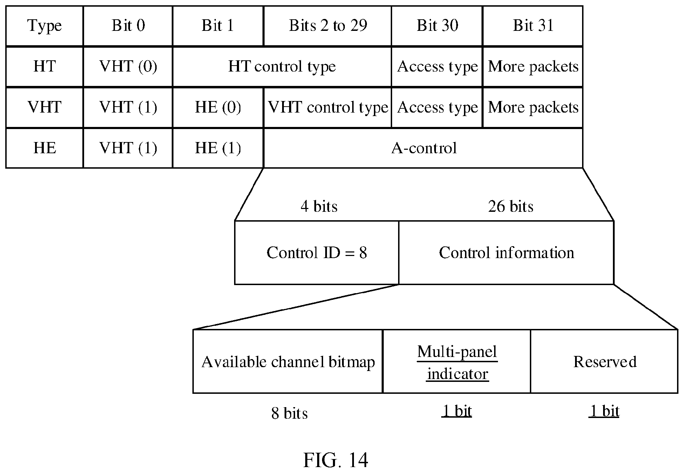

As shown in FIG. 14, this design method is reused based on a BQR frame in IEEE 802.11ax. After the available channel bitmap field in the control information field in the BQR frame, either bit of the original two bits is designed as a multi-panel indication bit. If a value of the multi-panel indication bit is 0, it indicates a single panel. In this case, meanings of values of the available channel bitmap field are consistent with the original meanings. If a value of the multi-panel indication bit is 1, it indicates a plurality of panels. In this case, meanings of values of the available channel bitmap field are inconsistent with the original meanings. Specifically, when a bandwidth is less than or equal to 160 MHz, each bit indicates availability information of a specific 20 MHz channel for each panel. When a bandwidth is greater than 160 MHz, each bit represents availability information of a specific 40 MHz channel for each panel.

### Implementation 2:

An overall process is as follows.
Step 1: The STA sends second information to the AP, where the second information is carried in a trigger frame for panel negotiation (Trigger Frame for Panel Negotiation, TF-PN), and the TF-PN is modified based on a trigger frame in IEEE 802.11ax, and is used to trigger the AP to respond with a PNR frame, or a CTS frame and a PNR frame. It should be noted that IEEE 802.11ax allows only the AP to send a TF, but this application allows the STA to send a TF.
Step 2: The AP receives the TF-PN, and if a destination address of the TF-PN is not the AP, the AP discards the TF-PN; or if a destination address of the TF-PN is the AP, the AP needs to respond with the CTS frame on one or more 20 MHz channels indicated by the TF-PN after an SIFS. It should be understood that it is optional for the AP to respond with the CTS frame. To be specific, the AP may respond with the CTS frame, or may not respond with a CTS frame.
Step 3: After completing sending the CTS frame and further waiting for the SIFS, the AP responds with first information on a resource unit indicated by the TF-PN, where the first information is carried in the PNR frame. The PNR frame includes information about a currently available panel of the AP or information about available subchannels of different panels of the AP. In this step, if the AP responds with the PNR frame on more than one 20 MHz channel, there are two methods: (1) The PNR frame is replicated and sent, that is, the PNR frame on each 20 MHz channel has completely same content, and carries panel availability information of the entire bandwidth. (2) PNR frames of different content are sent, that is, content of the PNR frame on each 20 MHz channel is different, and carries only corresponding panel availability information of the 20 MHz channel.
Step 4: After receiving the PNR frame with which the AP responds, the STA extracts the information about the currently available panel of the AP or the information about the available subchannels of different panels of the AP, and further determines, based on the information, at least one MIMO mode for data transmission.

In this implementation, any PNR frame design method in Implementation 1 may be applied. Next, a method for designing the TF-PN is further described.

### TF-PN design method 1:

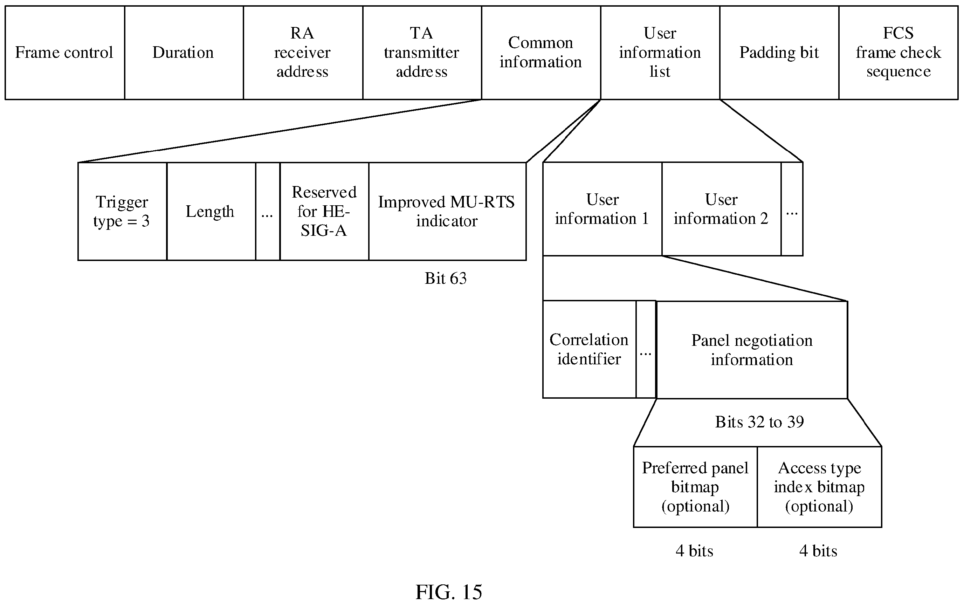

As shown in FIG. 15, this design method is modified based on a multi-user request to send (Multi-user - Request to Send, MU-RTS) frame in IEEE 802.11ax. The MU-RTS frame is a type of trigger frame in IEEE 802.11ax, and a value of 3 of the trigger type field indicates an MU-RTS frame. Specific modifications are described as follows: First, bit 63 (counting from 0) in a common information (Common Info) field of the MU-RTS frame is changed from a reserved (Reserved) bit in 802.11ax into an improved MU-RTS (Improved MU-RTS) indication bit, where a value of 1 indicates an improved MU-RTS, and a value of 0 indicates that the meaning in 802.11ax is still used. Second, bits 32 to 39 (counting from 0) in a user information (User Info) field of the MU-RTS frame are changed into those in a panel negotiation information field. The panel negotiation information field consists of a preferred panel bitmap field and an access type index bitmap field. The preferred panel bitmap field is an optional field, and indicates an AP panel preferred by a STA. Each bit represents one panel. A value of 1 indicates being preferred for use, and a value of 0 indicates that being not preferred for use. The access type index bitmap field is an optional field. Each bit indicates an access type. A value of 1 indicates that a service of the access type is to be transmitted, and a value of 0 indicates that a service of the access type is not to be transmitted. The access type index bitmap field has been defined in 802. 11ax.

### TFPN frame design method 2:

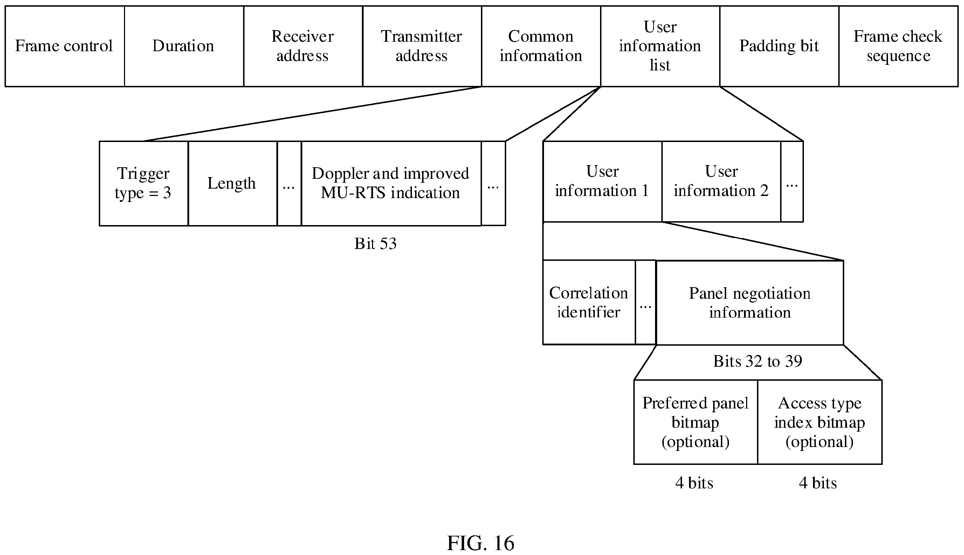

As shown in FIG. 16, an only difference between this design method and the design method 1 lies in that in the design method 1, bit 63 (counted from 0) in the common information field of a MU-RTS frame is changed from the reserved (Reserved) bit in 802.11ax into the improved MU-RTS (Improved MU-RTS) indication bit, but the reserved bit is not used in this design method. Instead, a function of bit 53 is extended from a Doppler bit in 802.11ax to a Doppler and improved MU-RTS indication bit. If the trigger frame is an MU-RTS, this field indicates an improved RTS indication. A value of 1 indicates an improved MU-RTS, and a value of 0 indicates that the meaning in 802.11ax is still used. If the trigger frame is not an MU-RTS, the meaning of the field is consistent with that in 802.11ax. It should be noted that, an original Doppler bit in 802. 11ax may be reused, or another existing bit that is not used in a common information field of a MU-RTS frame may be used in this design method.

### TF-PN design method 3:

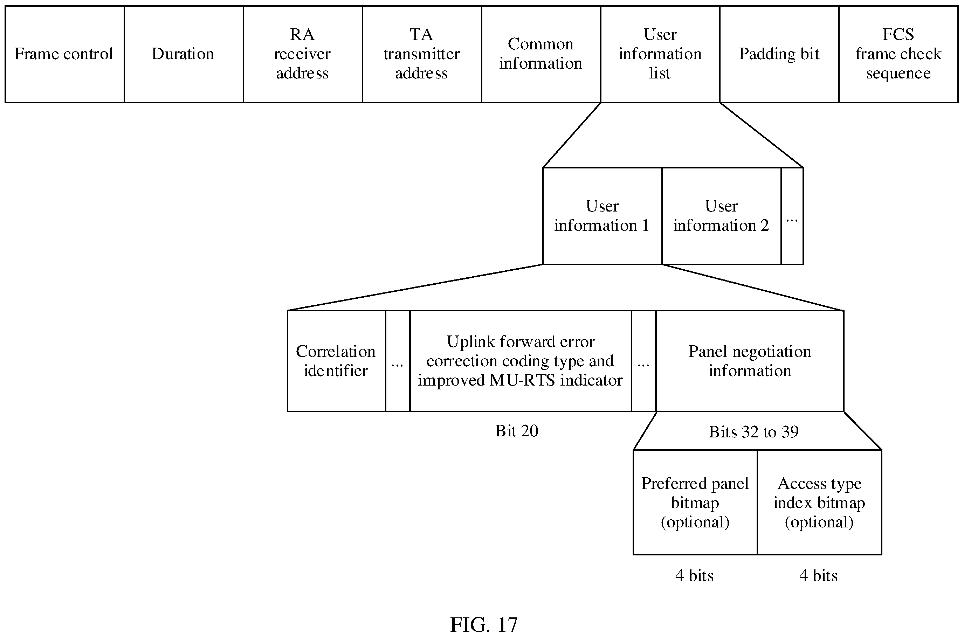

As shown in FIG. 17, a difference between this design method and the design methods 1 and 2 lies in that a common information field in an MU-RTS frame does not need to be changed, and only a user information field needs to be modified. Specifically, bit 20 (counting from 0) in a user information field is extended from an uplink forward error correction coding type bit in 802.11ax to an uplink forward error correction coding type and improved MU-RTS indication bit. If the trigger frame is an MU-RTS, this field indicates an improved RTS indication. A value of 1 indicates an improved MU-RTS, and a value of 0 indicates that the meaning in 802.11ax is still used. If the trigger frame is not an MU-RTS, the meaning of the field is consistent with that in 802.11ax. It should be noted that, an original uplink forward error correction coding type bit in 802. 11ax is reused, or another existing bit that is not used in a user information field of a MU-RTS frame may be used in this embodiment. Remaining fields can be modified in the same method as the design methods 1 and 2.

### TF-PN design method 4:

A difference between this design method and the design methods 1 to 3 lies in that in this design method, a new trigger frame type is used, that is, a value of a trigger frame type field in a common information field is 10 or another reserved value. The meanings of other fields in reference design methods 1 to 3 may continue to be used. An only difference lies in that no improved MU-RTS indication bit is required in this design method.

It should be noted that a location and a length of each field in this design method are not limited, and whether some bits of a previous field are reused is not limited.

After receiving the PNR frame with which the AP responds, the STA extracts information about the currently available panel of the AP or the information about the available subchannels of different panels of the AP, and further determines, based on the information, at least one MIMO mode for data transmission. This process includes a plurality of cases.

If the PNR frame indicates that the currently available panel of the AP or currently available subchannels thereof are the same, the STA may perform data transmission with the AP in one MIMO mode.

If the PNR frame indicates that availability statuses of the different panels of the AP on different subchannels are different, available subchannels are divided into a plurality of RUs in an orthogonal frequency division multiple access (Orthogonal Frequency Division Multiple Access, OFDMA) manner. Different MIMO modes are used on different RUs, and different RUs include different subchannels. It should be understood that different MIMO modes mean the number of used spatial streams or the number of used antennas are different.

In the data transmission process, the STA may send third information to the AP. The third information may be carried in an extremely high throughput single-user hybrid physical layer protocol data unit EHT-SU-H-PPDU. The EHT-SU-H-PPDU includes a resource unit allocation (RU Allocation) field and a panel bitmap field. The resource unit allocation field indicates RUs into which the available subchannels are divided, the panel bitmap field indicates whether an antenna panel of the second device is used in the RUs, so that the AP indicates the STA to use different MIMO modes in different RUs. It should be understood that data transmitted by the second device to the first device may also be carried in the EHT-SU-H-PPDU, for example, a field carrying the third information is placed before a field carrying the transmitted data.

For example, the PNR frame with which the AP responds carries that both the panel 1 and the panel 2 of the AP are available on the first 20 MHz channel, and only the panel 1 is available on the second 20 MHz channel. In this case, the STA sends the EHT-SU-H-PPDU to the AP in subsequent transmission. The EHT-SU-H-PPDU indicates to divide different available subchannels into two RUs, and each RU occupies 20 MHz. On an RU corresponding to the first 20 MHz channel, the STA performs 8 x 8 MIMO data transmission with the AP. On an RU corresponding to the second 20 MHz channel, the STA performs 4 x 4 MIMO data transmission with the AP.

EHT-SU-H-PPDU designs include but are not limited to the following two methods. In addition, the third information may be carried in the EHT-SU-H-PPDU, or may be carried in another field.

### EHT-SU-H-PPDU design method 1:

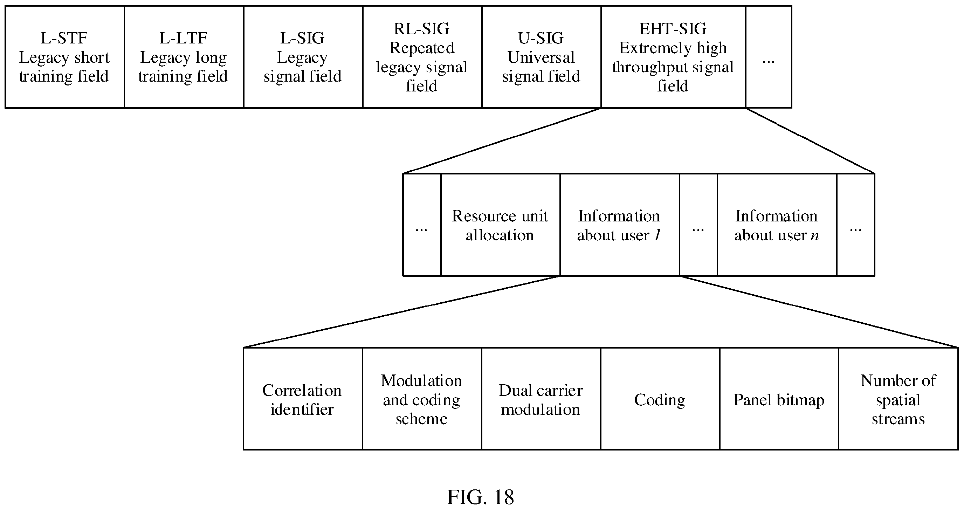

As shown in FIG. 18, an extremely high throughput signal field in the EHT-SU-H-PPDU includes a resource unit allocation field. The resource unit allocation field indicates that different channels are divided into several RUs. The extremely high throughput signal field is followed by a per user field. Each per user information field corresponds to a specific RU, and their correspondence is designed in a resource unit allocation field, and is irrelevant to this application. The meanings and functions of fields, covering a correlation identifier, a modulation and coding scheme, dual carrier modulation, coding, and the number of spatial streams, in each per user information field, are consistent with those in 802.11ax. A panel bitmap field is a field newly introduced in this application. Each bit indicates a usage status of one panel of a STA on the RU. A value of 1 indicates that the panel is used, and a value of 0 indicates that the panel is not used.

### EHT-SU design method 2:

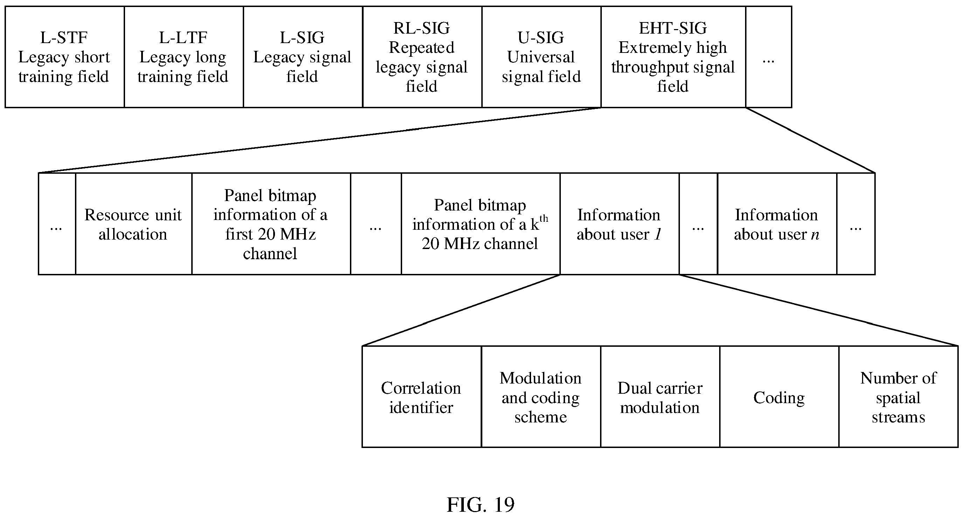

As shown in FIG. 19, this method is similar to the EHT-SU-H-PPDU design method 1, and a difference lies in that there are several panel bitmap information fields after a resource unit allocation field. An i^{th} panel bitmap information field indicates a usage status of an i^{th} 20 MHz panel. Each bit indicates a usage status of one panel on the RU. A value of 1 indicates that the panel is used, and a value of 0 indicates that the panel is not used. A user information field in this design method is consistent with that in 802.11ax.

The meanings indicated by "0" and "1" in embodiments of this application are merely examples. For example, "a value of 0 indicates a PNRP frame, and a value of 1 indicates a PNR frame", or "a value of 1 indicates a PNRP frame, and a value of 0 indicates a PNR frame". For another example, "a value of 1 indicates being preferred for use, and a value 0 indicates being not preferred for use", or "a value 0 indicates being preferred for use, and a value 1 indicates being not preferred for use". The values of "0" and "1" may also be replaced with other available values, which is not limited thereto.

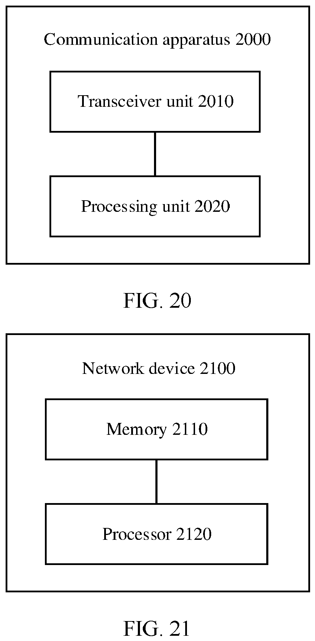

An embodiment of this application provides a communication apparatus 2000. FIG. 20 is a schematic block diagram of the communication apparatus 2000 according to an embodiment of this application. The communication apparatus 2000 includes:
a transceiver unit 2010, configured to receive first information from a first device, where the first information indicates an available antenna panel of the first device; and
a processing unit 2020, configured to perform data transmission with the first device based on the first information.

Optionally, the first information further indicates an available subchannel of the available antenna panel.

Optionally, the transceiver unit 2010 is further configured to send second information to the first device. The second information requests the first device to send the first information.

Optionally, the second information further includes an identifier of at least one target antenna panel. The target antenna panel is an antenna panel that the second device requests the first device to use.

Optionally, the transceiver unit 2010 is further configured to receive a clear to send CTS frame from the first device.

Optionally, the processing unit 2020 is specifically configured to determine a multiple input multiple output MIMO mode based on the first information. The transceiver unit 2010 is specifically configured to perform data transmission with the first device in MIMO mode.

Optionally, the transceiver unit 2010 is further configured to send third information to the first device. The third information indicates a resource unit RU into which the available subchannel is divided and a MIMO mode on the RU.

An embodiment of this application provides a network device 2100. FIG. 21 is a schematic block diagram of a network device according to an embodiment of this application. The network device 2100 includes:
a memory 2110, configured to store executable instructions; and
a processor 2120, configured to invoke and run the executable instructions in the memory 2110, to implement the method in embodiments of this application.

The foregoing processor may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. Steps of the methods disclosed with reference to embodiments of this application may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The foregoing memory may be a volatile memory or a non-volatile memory, or may include both a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be understood that the memory may be integrated into the processor, or the processor and the memory may be integrated into a same chip, or may be separately located on different chips and connected in an interface coupling manner. This is not limited in this embodiment of this application.

An embodiment of this application further provides a computer-readable storage medium. The computer-readable storage medium stores computer instructions used to implement the method in the foregoing method embodiments. When the computer program is run on a computer, the computer is enabled to implement the method in the foregoing method embodiments.

A person skilled in the art may be aware that units and algorithm steps in the examples described with reference to the embodiments disclosed in this specification can be implemented by electronic hardware or an interaction of computer software and electronic hardware. Whether the functions are performed by hardware or software depends on particular applications and design constraint conditions of the technical solutions. A person skilled in the art may use different methods to implement the described functions for each specific application, but such implementation should not be considered beyond the scope of this application.

A person skilled in the art may clearly learn that, for the purpose of convenient and brief description, for a specific working process of the foregoing system, apparatus, and unit, refer to a corresponding process in the foregoing method embodiments, and details are not described herein again.

In the several embodiments provided in this application, it should be understood that the disclosed systems, apparatuses, and methods may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or other forms.

The units described as separate parts may or may not be physically separate. Parts displayed as units may or may not be physical units, and may be located in one position or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in one storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method comprises:
receiving, by a second device, first information from a first device, wherein the first information indicates an available antenna panel of the first device; and
performing, by the second device, data transmission with the first device based on the first information.

2. The method according to claim 1, wherein the first information further indicates an available subchannel of the available antenna panel.

3. The method according to claim 1 or 2, wherein before the receiving, by a second device, first information from a first device, the method further comprises:
sending, by the second device, second information to the first device, wherein the second information requests the first device to send the first information.

4. The method according to claim 3, wherein the second information further comprises an identifier of at least one target antenna panel, wherein the target antenna panel is an antenna panel that the second device requests the first device to use.

5. The method according to claim 4, wherein before the receiving, by a second device, first information from a first device, the method further comprises:
receiving, by the second device, a clear to send CTS frame from the first device.

6. The method according to any one of claims 1 to 5, wherein the performing, by the second device, data transmission with the first device based on the first information comprises:
determining, by the second device, a multiple input multiple output MIMO mode based on the first information; and
performing, by the second device, data transmission with the first device in MIMO mode.

7. The method according to any one of claims 6, wherein the performing, by the second device, data transmission with the first device in MIMO mode comprises:
sending, by the second device, third information to the first device, wherein the third information indicates a resource unit RU into which the available subchannel is divided and a MIMO mode on the RU.

8. A communication apparatus, comprising:
a transceiver unit, configured to receive first information from a first device, wherein the first information indicates an available antenna panel of the first device; and
a processing unit, configured to perform data transmission with the first device based on the first information.

9. The apparatus according to claim 8, wherein the first information further indicates an available subchannel of the available antenna panel.

10. The apparatus according to claim 8 or 9, wherein the transceiver unit is further configured to send second information to the first device, wherein the second information requests the first device to send the first information.

11. The apparatus according to claim 10, wherein the second information further comprises an identifier of at least one target antenna panel, wherein the target antenna panel is an antenna panel that the second device requests the first device to use.

12. The apparatus according to claim 11, wherein the transceiver unit is further configured to receive a clear to send CTS frame from the first device.

13. The apparatus according to any one of claims 8 to 12, wherein
the processing unit is specifically configured to determine a multiple input multiple output MIMO mode based on the first information; and
the transceiver unit is specifically configured to perform data transmission with the first device in MIMO mode.

14. The apparatus according to claim 13, wherein the transceiver unit is further configured to send third information to the first device, wherein the third information indicates a resource unit RU into which the available subchannel is divided and a MIMO mode on the RU.

15. A network device, comprising:
a memory, configured to store executable instructions; and
a processor, configured to invoke and run the executable instructions in the memory, to perform the method according to any one of claims 1 to 7.

16. A computer-readable storage medium, wherein
the computer-readable medium stores a computer program; and
when the computer program is run on a computer, the computer is enabled to perform the method according to any one of claims 1 to 7.
